# EUROPEAN PATENT APPLICATION

(11) **EP 0 967 549 A2**
(43) Date of publication of application: **29.12.1999**
(21) Application number: 99304958.4
(22) Date of filing: 23.06.1999
(51) Int. Cl.: G06F 9/46, G06F 9/44

(54) **Processing asynchronously called operations of objects**

(30) Priority: 24.06.1998 US 104291
(71) Applicant: Intellution Inc., Norwood, Massachusetts 02062 (US)
(72) Inventor: Jones, Stephen Kent, Canton, Massachusetts 02021 (US); Greene, James, Bedford, Massachusetts 01730 (US)
(74) Representative: Garratt, Peter Douglas

(57) **Abstract**

Asynchronously called operations of a plurality of objects are processed by assigning a processing priority to each of the plurality of objects, and executing asynchronously called operations of the plurality of objects in an order determined by the processing priorities assigned to the objects in which the asynchronously called operations are included. Processing priorities may be assigned to each of the plurality of objects based upon information-transfer relationships among the plurality of objects.

## Description

Object-oriented programming is a common software development tool. Examples of fields in which the object-oriented paradigm currently is used include: batch process control, industrial automation, banking, and utility management. Additionally, many new operating systems, database systems, telephony systems, avionics systems, and multimedia applications are being implemented using object-oriented techniques. Examples of object-oriented programming languages include: C++, Smalltalk, CLOS, Ada, and Eiffel.

Object-oriented programming is a method of implementation in which software programs are organized as cooperative collections of objects, each of which represents an instance of some predefined class. A class is a set of objects that share a common structure and a common behavior. Typically, an object is defined to include both properties and operations which are common to all objects in a class.

A property of an object may be a simple quantity or value, or may be a reference to another object. Properties are generally declared when a class is defined, and are set when an instance of the class, i.e., an object, is first created. Many properties can be modified during the running of a software application including the object.

An operation is a predefined action that an object may be requested to execute. Operations are generally declared as "methods" or "member functions" when a class is defined. An operation of an object may be invoked in response to a change in one or more of the properties of the object, in response to an event, by an operation of another object, or by one of the object's own operations. One or more of an object's properties may be changed as a result of one of its operations being executed. Commonly, an object that has been properly requested to execute an operation is said to have "work pending" or "work to do."

When one object requests another object to invoke an operation, the requesting object is said to have sent a "message" to the other object. Since the object performing the operation in response to the message is, in effect, performing a service for the requesting object, the performing object is called the "supplier" and the requesting object is called the "client." Messages may be sent between objects either synchronously or asynchronously.

A message is sent synchronously from a client to a supplier when both the client and the supplier are synchronized at the moment the message is transmitted. In other words, the supplier performs the requested operation only if it is ready to perform the operation at the same time that the client is requesting its performance. If, upon presenting a message to the supplier, the supplier is not ready to perform the requested operation, the client waits indefinitely for the supplier to accept the message. Alternatively, after the client has presented a message to the supplier, if the supplier and client are not immediately synchronized, or are not synchronized after a predetermined period of time, the client may abandon the message and possibly attempt to send the message at a later time.

In contrast to a synchronous message passing process, an asynchronous message passing process permits messages from the client to be buffered until the supplier is ready to perform the requested operation. In this manner, the sender can continue performing its own operations before the requested operation is performed by the intended recipient of the message. One known manner of implementing asynchronous message passing is to use a so-called "performable model." In a performable model, when a client desires to perform an operation of a supplier, the client instead performs an operation that registers its call to the supplier's operation in a queue of a so-called "thread manager." After a client has registered a supplier's operation in the thread-manager's queue, the supplier's operation is said to have been "performed." The thread manager then may execute the operations registered in its queue, i.e., call the performed operations of the suppliers, according to some predetermined criteria.

In systems such as that described above which use asynchronous message passing, thread managers execute performed operations in one of two ways. One way is to execute the performed operations in the order that the operations are placed in the queue. In such a case, the thread manager's queue is implemented as a first-in-first-out queue, and the performed operations are performed on a first-come-first-served basis. The other known way for thread managers to execute performed operations is to allocate processor time to each performed operation using a round robin rotation algorithm. In a round robin rotation algorithm, processor time is divided into units called time slices, with one time slice being allocated to each performed operation in the thread manager's queue.

According to one aspect, a method for processing asynchronously called operations of a plurality of objects involves assigning a processing priority to each of the plurality of objects. Asynchronously called operations of the plurality of objects are executed in an order determined by the processing priorities assigned to the objects in which the asynchronously called operations are included.

According to another aspect, an apparatus for processing asynchronously called operations of a plurality of objects assigns a processing priority to each of the plurality of objects. Asynchronously called operations of the plurality of objects are executed in an order determined by the processing priorities assigned to the objects in which the asynchronously called operations are included.

According to yet another aspect, a computer-readable medium has a plurality of instructions stored thereon which, when executed by a processor, cause the processor to assign a processing priority to each of a plurality of objects. Asynchronously called operations of the plurality of objects are executed in an order determined by the processing priorities assigned to the objects in which the asynchronously called operations are included.

According to another aspect, an object-oriented system for processing asynchronously called operations of a plurality of objects includes first and second object classes. Each of the plurality of objects is an instance of the first object class or a subclass of the first object class, and each of the plurality of objects includes: a first property indicating a processing priority, a first operation, and a second operation for asynchronously calling a first operation of another of the plurality of objects. An instance of the second object class includes at least one third operation for executing asynchronously called operations of the plurality of objects in an order determined by the first properties of the objects in which the asynchronously called operations are included.

In the drawings, like-reference numerals indicate like structures or method steps, and the left-most numeral of a reference numeral indicates the number of the figure in which the referenced element first appears. With regard to the drawings:
Fig. 1 is a diagram showing an example of a network of interconnected objects;
Fig. 2 is a flow chart showing one operation that may be included in each of the objects shown in the network of Fig. 1 according to one embodiment of the invention;
Fig. 3 is a flow chart showing another operation that may be included in each of the objects shown in the network of Fig. 1 according to one embodiment of the invention;
Fig. 4 is a diagram showing how processing priorities may be assigned to the network of interconnected objects shown in Fig. 1 according to one embodiment of the invention;
Fig. 5 is a chart showing how a queue of a thread manager might appear according to one embodiment of the invention; and
Fig. 6 is a block diagram showing a system with which embodiments of the present invention may be implemented.

In a system of interconnected objects wherein certain objects receive data from certain other objects and use that data for their own operations, executing performed operations on a first-come-first-served or round robin basis, without taking into account the data transfer relationships between the objects, can result in errors. Such an error might occur, for example, when a first object receives data from a second object, and the thread manager executes a performed operation of the first object before it executes a performed operation of the second object. In this situation, if the performed operation of the second object (when executed by the thread manager) alters the state of the data supplied to the first object, the operation of the first object will have been executed using stale data and its result will not accurately reflect the current state of the data supplied by the second object.

In one embodiment, a processing priority is assigned to each object that is connected to another object in a manner that permits information to be transferred from one object to the other, e.g., message transmissions, data or signal transfers, event deliveries, etc. In different embodiments, however, processing priorities may be assigned only to objects that are connected to other objects in certain "qualifying" information-transfer relationships. For example, processing priorities may not be assigned when one object receives only status information, e.g., in response to a message transmission, from another object. The processing priorities may be assigned such that each object that receives qualifying information from another object has a lower processing priority than the object from which it receives the information.

In one embodiment in which a performable model is used, a thread manager queue is employed that has priority levels corresponding to the processing priorities of the interconnected objects in the system. When performed operations are queued for execution by the thread manager, the operations may be queued according to the processing priority assigned to the object in which the operation is included. The thread manager then may execute the performed operations beginning with the those located in the highest priority level of the queue and proceeding, level-by-level, to those located in the lowest priority level. In this manner, the thread manager will not execute a performed operation of any given object until all of the performed operations of the objects that provide information to that object have finished processing.

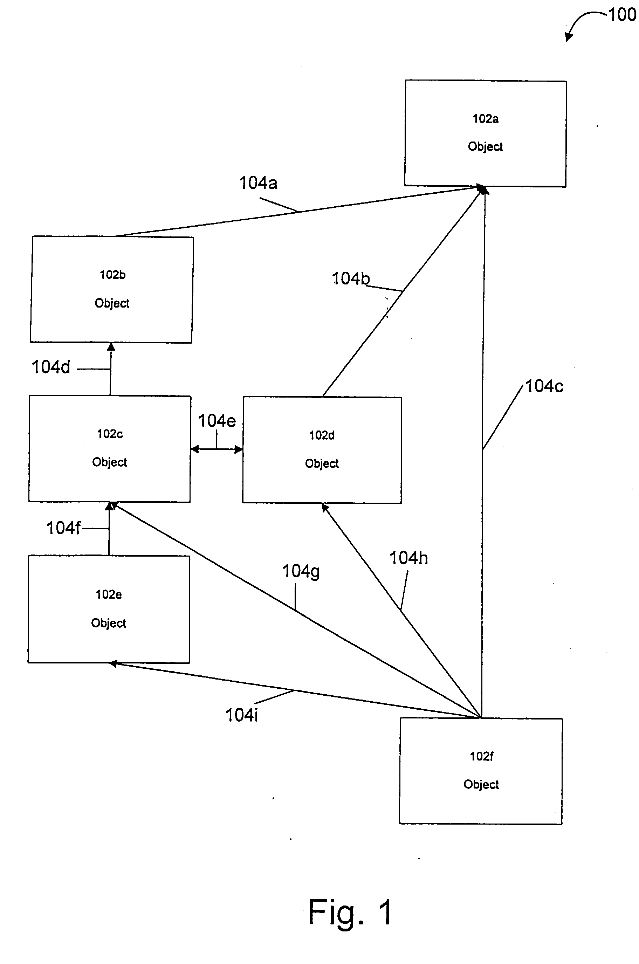

An example of a network of interconnected objects 100 is shown in Fig. 1. As shown, the network 100 includes objects 102a-f, and each object 102 is connected to at least one other object 102 via a connection 104. In one embodiment, the network 100 is stored on a computer readable medium (not shown), e.g., a memory, disk drive, tape drive, etc., which may be accessed by a processor (not shown) for execution. Each of the connections 104a-i represents an information-transfer relationship between the two objects 102 connected by the connection 104. In the Fig. 1 example, the direction of the arrows on the connections 104 represent the direction in which information flows from one object to the other. For example, the connection 104a indicates that information flows from the object 102b to the object 102a, and the connection 104e indicates that information flows in both directions between the objects 102c and 102d. With regard to any two objects 102 connected by a connection 104, the one of the two objects 102 that receives information over the connection 104 will hereafter be referred to as the "receiving object," and the other of the two objects 102 which provides information over the connection 104 will hereafter be referred to as the "supplying object."

In one embodiment, a generic class of objects is declared that includes several properties (e.g., CURRENT PRIORITY, CONNECTIONS IN, and CONNECTIONS OUT) and several operations (e.g., PERFORM, UPDATE, GET PRIORITY, and SET PRIORITY) relating to the assignment and use of the processing priorities discussed above, and each of the objects 102 in the network 100 is a member of a subclass of this generic class of objects. Therefore, in addition to the properties and operations of the subclass in which it is included, each of the objects 102 inherits each of the above-mentioned properties and operations from the generic class. The manner in which each of these inherited properties and operations is employed in one embodiment of the invention is described below.

Information regarding the connections 104a-i, i.e., the information-transfer relationships, between the objects 102a-f may be stored in any of numerous ways, and the invention is not limited to any particular manner of storage. In one embodiment, for example, the interconnection information may be stored by the objects 102a-f themselves as their CONNECTIONS IN and CONNECTIONS out properties. For each object 102, this stored interconnection information may identify, for example: (1) each object 102 that provides information to it via a connection 104, and (2) each object 102 to which it provides information via a connection 104. The CONNECTIONS IN and CONNECTIONS OUT properties of the objects 102 may be manipulated, for example, by a user invoking operations of the objects 102, or may altered automatically when new inter-object connections are established. It should be appreciated that the criteria for what constitutes an information-transfer relationship that qualifies as a connection 104 may vary from application to application, and connections 104 may be assigned between different pairs of objects 102 in the network 100 according to different criteria. The invention is not limited to any particular definition of a connection 104.

In one embodiment, a processing priority is assigned to each object 102 that is connected to any other object 102 in the network 100 so that, for each pair of objects 102 connected via a connection 104 (unless each of the pair of objects 102 supplies information to the other), the receiving object 102 has a lower processing priority than the supplying object 102. If each of the pair of objects 102 supplies information to the other, the two objects 102 may be assigned either the same or different processing priorities. In one embodiment, the processing priority of each object 102 is stored as its CURRENT PRIORITY property. The CURRENT PRIORITY property of each object 102 is set to a base value when the object 102 is first created, which corresponds to the lowest priority level in the queue of the thread manager (described below), and may be increased depending on the placement of the connections 104 in the network 100.

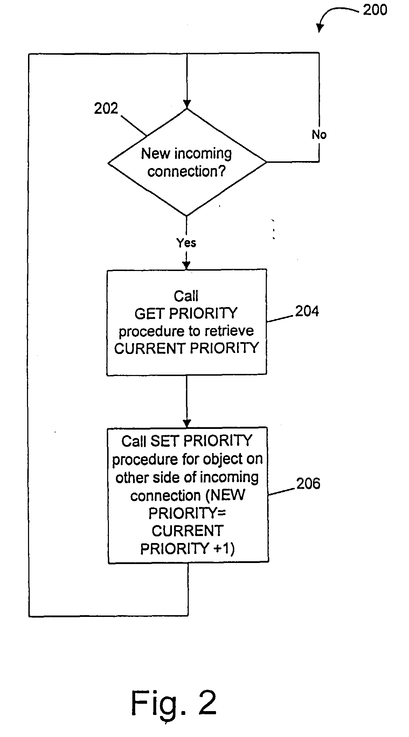

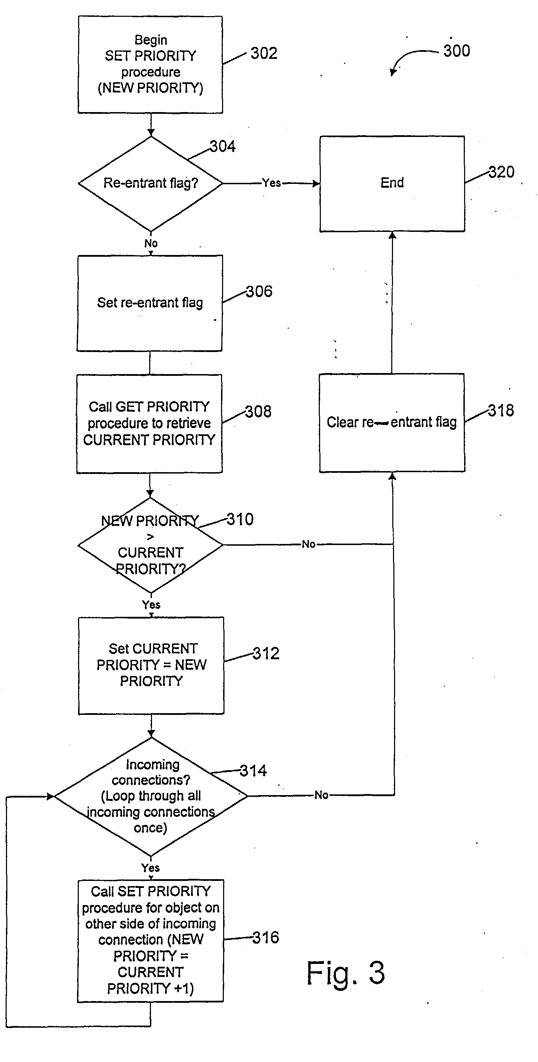

The objects 102 may be assigned processing priorities in any of numerous ways, and the invention is not limited to any particular method of assignment. In one embodiment, for example, processing priorities are assigned each time a new connection 104 is established between any two objects 102 in the network 100. Figs. 2 and 3 illustrate examples of how the operations UPDATE, GET PRIORITY and SET PRIORITY of the objects 102 may be performed to reassign processing priorities to the objects 102 in the network 100 in response to a new connection 104 being established between a receiving object 102 and a supplying object 102. In one embodiment, the operations shown in Figs. 2 and 3 are implemented using synchronous message passing, as distinguished from the asynchronous message passing used when the PERFORM operation (described below) is called.

Fig. 2 shows one embodiment of the UPDATE operation 200 which, as mentioned above, may be included in each of the objects 102 in the network 100. In one embodiment, whenever a new connection 104 is added to the network 100, the UPDATE operation 200 may be employed by an object 102 at the receiving end of the new connection. As shown in Fig. 2, when a receiving object 102 senses (at step 202) that it is to receive information via a new connection 104 (i.e., an object 102 senses a new incoming connection 104), the receiving object 102 may first call its GET PRIORITY operation (at step 204) to retrieve its CURRENT PRIORITY property. The receiving object 102 (at step 206) may then call the SET PRIORITY operation of the supplying object 102 (i.e., the object on the other side of the new connection 104) so that the supplying object 102 may, when appropriate, update the value of its CURRENT PRIORITY property. When calling the SET PRIORITY operation of the supplying object 102, the receiving object 102 passes an argument NEW PRIORITY with the SET PRIORITY operation. The receiving object 102 sets the NEW PRIORITY argument to be greater than its CURRENT PRIORITY property retrieved in the step 204. In one embodiment, the receiving object 102 sets the NEW PRIORITY argument to the value of its CURRENT PRIORITY property plus one.

Fig. 3 shows one embodiment of the SET PRIORITY operation 300 which, as mentioned above, may be included in each of the objects 102 in the network 100. The SET PRIORITY operation 300 of a supplying object 102 may be called by a receiving object 102 to set (when appropriate) the CURRENT PRIORITY property of the supplying object 102 to the argument NEW PRIORITY, which is passed with the call to the SET PRIORITY operation.

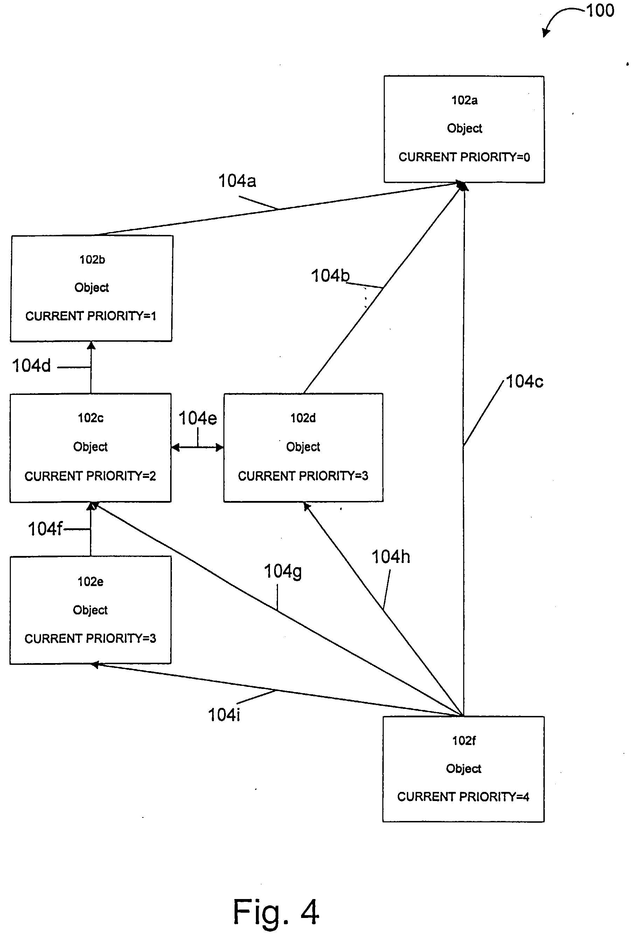

As shown in Fig. 3, the SET PRIORITY operation 300 begins at step 302. At step 304, the SET PRIORITY operation 300 checks to see whether a "re-entrant flag" is set. The re-entrant flag is used to make sure that the SET PRIORITY operation 300 has not previously been called in response to the new connection 104 that triggered the step 202 of the UPDATE operation 200 (described above). Were it not for the use of the re-entrant flag, when two objects 102 each supply information to the other, e.g., via the connection 104e (Fig. 4), each object 102 would repeatedly increase the processing priority of the other. The re-entrant flag therefore permits the processing priority of each of the objects 102c-d to be incremented only once each time a new connection 104 is established. As a result of the step 304, when the re-entrant flag is set, the SET PRIORITY operation 300 ends at step 320, and when the reentrant flag is not set, step 306 is performed.

At the step 306, the re-entrant flag is set. Next, at step 308, the supplying object 102 calls its GET PRIORITY operation to retrieve its CURRENT PRIORITY property. At step 310, when the argument NEW PRIORITY (passed with the SET PRIORITY operation) is less than or equal to the CURRENT PRIORITY property retrieved in the step 308, step 318 is performed, and when the argument NEW PRIORITY is greater than the CURRENT PRIORITY property retrieved in the step 308, step 312 is performed.

At the step 312, the CURRENT PRIORITY property is set to the value of the NEW PRIORITY argument. Next, at steps 314 and 316, all of the incoming connections 104 to the receiving object 102 are identified, and the receiving object 102 calls the SET PRIORITY operation of each of the objects 102 on the supplying-object side of each identified incoming connection 104. In one embodiment, the SET PRIORITY operations for these supplying objects 102 are identical to the SET PRIORITY operation 300. Therefore, for each of the incoming connections 104 identified in the step 314, the processing priority of the supplying object 102 associated therewith is (when appropriate) incremented, and each such supplying object 102 itself calls the SET PRIORITY operation of any object supplying it with an incoming connection 104. In this manner, the processing priorities of the objects 102 are incremented in a cascade fashion as the incoming connections 104 of each object 102 are identified and the objects 102 supplying these incoming connections 104 are updated by calls to their SET PRIORITY operations.

When all of the incoming connections 104 of the supplying object 102 have been processed by the step 316, the SET PRIORITY operation 300 proceeds to the step 318. At the step 318, the re-entrant flag is cleared so that it may be used during the next iteration of the operations 200 and 300 when another new connection 104 is established. After the step 318 is performed, the SET PRIORITY operation 300 ends at the step 320.

Fig. 4 shows an example of how processing priorities may be assigned to the objects 102a-f based upon the placement of the connections 104a-i shown in Fig. 1. As shown, for each pair of objects 102 connected by a connection 104, the processing priority of the supplying object 102 is higher than that of the receiving object 102.

By implementing the above-described cascading process (beginning with the receiving object 102 of each new connection 104) each time a new connection 104 is added to the network 100, the operations 200 and 300 can consistently maintain the processing priorities of all of the objects 102 in the network 100 in the proper order. That is, as the objects 102 (and the connections 104) are added to the network 100 one-by-one, the operations 200 and 300 ensure that, beginning with the first connection 104 established in the network 100, the processing priorities of all of the objects 102 in the network 100 take into account each new connection 104 added thereto.

As an alternative to beginning the above-described cascade process with the receiving object 102 of each new connection 104, a specific object 102, e.g., the object 102a, which is likely to be set to the lowest processing priority in the network 100 may be selected to begin the cascading process each time a new connection 104 is added anywhere in the network 100. In this situation, the UPDATE operation 200 may be performed by the selected object, e.g., the object 102a in response to a new connection 104 being added anywhere in the network 100, and the selected object may then call the SET PRIORITY operation for each supplying object 102 connected to it via a connection 104.

As mentioned above, in one embodiment, each of the objects 102a-f in the network 100 may invoke the operations of the other objects 102 in the network 100 asynchronously, i.e., a performable model may be employed. These asynchronous calls may be made in any of numerous ways, and the invention is not limited to any particular method. In one embodiment, for example, each object 102 that desires to asynchronously call operations of other objects 102 in the network 100 first registers with a thread manager to enable the thread manager to allocate resources to service that object's asynchronous calls. The thread manager may, for example, be implemented as an object (not shown) stored on a computer-readable medium (not shown), e.g., a memory, disk drive, tape drive, etc., which may be accessed by a processor (not shown) for execution. After registering with the thread manager, an object 102 may invoke its PERFORM operation to register one or more asynchronous calls to another object's operation(s) with the thread manager.

The thread manager may maintain information regarding asynchronously called operations that are waiting to be executed in any of numerous ways, and the invention is not limited to any particular technique. In one embodiment, for example, each time the PERFORM operation is invoked by an object 102 to asynchronously call an operation of another object 102, a new object (not shown) is created and stored on a computer-readable medium (not shown) which includes pointers to the called operation of the other object 102. This newly created "pointer" object then may be placed in a queue of the thread manager for execution in due course.

In one embodiment, the thread manager's queue may be divided into multiple priority levels, and the pointer objects created as a result of asynchronously called PERFORM operations may be placed into a level of the queue corresponding to a priority level of the object 102 including the performed operation. The thread manager may then execute the performed operations identified by the pointer objects in its queue beginning with the highest priority level in the queue and working its way to the lowest priority level. In this manner, for each connection 104 (Figs. 1 and 4), because the supplying object 102 is assigned a higher CURRENT PRIORITY property than the receiving object 102, the pointer objects representing performed operations of the supplying object 102 are placed at a higher priority level of the thread manager's queue than those representing performed operations of the receiving object 102. Therefore, for each pair of objects connected by a connection 104, all performed operations of the supplying object 102 are executed by the thread manager before any of the performed operations of the receiving object 102.

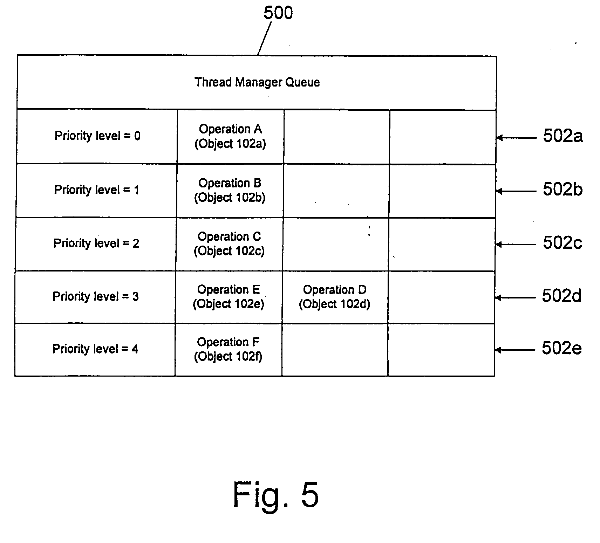

Fig. 5 shows one embodiment of the thread manager's queue 500. In the example shown, the queue 500 includes several priority levels 502a-e. As operations are asynchronously called for particular objects 102 in the network 100, pointer objects including pointers to performed operations may be placed in a priority level 502a-e of the queue 500 corresponding to the priority level of the object 102 (identified by its CURRENT PRIORITY property) in which the performed operation is included. The queue 500 is shown as it might appear after one operation of each of the objects 102 in the network 100 has been asynchronously called by another object's PERFORM operation. It should be appreciated, however, that the queue 500 may include any number of pointer objects at a given time, and that several pointer objects for a single object's performed operations may be concurrently located in the queue 500.

In the illustrative implementation described above, the thread manager may execute the operations represented by the pointer objects in the queue 500 beginning with the highest priority level (i.e., the level 502e), and proceeding stepwise to the lowest priority level (i.e., the level 502a). In the Fig. 5 example, the thread manager will execute the operations A-F in the following order: operation F (object 102f), operation E (object 102e), operation D (object 102d), operation C (object 102c), operation B (object 102b), and operation A (object 102a). In this manner, for each of the connections 104a-i, the operation of each receiving object 102 is executed after the operation of each supplying object 102. Therefore, each object 102 in the network 100 for which a performed operation is registered with the thread manager will perform its operation on valid data, and is guaranteed not perform its operation on data that might be altered by another performed operation that is concurrently registered with the thread manager.

In one embodiment, an asynchronous call to an operation of another object 102 may be made by calling a special PERFORM operation that characterizes the operation being asynchronously called as being, for example, either LOW PRIORITY, NORMAL PRIORITY, or HIGH PRIORITY. Using this information, the thread manager may first execute all HIGH PRIORITY performed operations registered in its queue, followed by the NORMAL PRIORITY operations, the LOW PRIORITY operations, and finally the operations that were called using the normal PERFORM operation described above.

Further, in one embodiment, one object 102 can asynchronously call several operations of another object 102 and cause the thread manager to execute these operations in sequence by sandwiching several calls to the object's PERFORM operation (one for each asynchronously called operation) between calls to a pair of operations that appropriately frame the performed operations queued by the thread manager so that the thread manager knows to execute them sequentially.

Additionally, in one embodiment, when an object 102 calls its PERFORM operation to asynchronously call an operation of another object 102, a "key," which uniquely identifies the resulting entry in the thread manager's queue, is stored with the thread manager. If desired, the object 102 that made the asynchronous call then may call one operation to retrieve the key and, using the key, may call another operation to remove the entry identified by the key from the thread manager's queue.

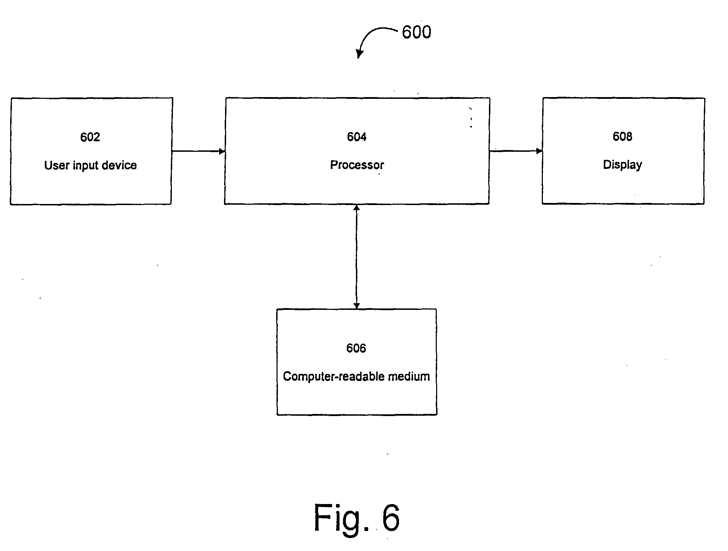

Fig. 6 shows one embodiment of a system 600 with which embodiments of the present invention may be employed. As shown, the system 600 includes a processor 604 having a computer-readable medium 606 coupled thereto. The computer-readable medium 606 may be any of numerous types of computer-readable devices, e.g., a memory, disk drive, tape drive, etc., and the invention is not limited to any particular type of device. In one embodiment, the objects 102 in the network 100, the thread manager object, and all of the pointer objects created when asynchronous operation calls are made between the objects 102, are stored on the computer-readable medium 606, and are accessible to the processor 604. In one embodiment, the processor 604 may execute the above-described operations using the contents of the medium 606.

The Fig. 6 system further includes a user input device 602 and a display 608, each coupled to the processor 604. In one embodiment, a user may, for example, use these components to add objects 102 to, or delete objects 102 from, the network 100, and/or to alter the connections 104, or add connections 104, between the objects 102 in the network 100.

With regard to the system shown in Fig. 6, it should be appreciated that additional or different components may be used in connection with different embodiments, and that the invention is not limited to any particular hardware configuration.

Having described at least one embodiment in detail, various modifications and improvements will readily occur to those skilled in the art. Such modifications and improvements are intended to be within the scope of the invention. Accordingly, the foregoing description is by way of example only, and is not intended to be limiting.

## Claims

1. A method for processing asynchronously called operations of a plurality of objects, comprising steps of:
(a) assigning a processing priority to each of the plurality of objects; and
(b) executing asynchronously called operations of the plurality of objects in an order determined by the processing priorities assigned to the objects in which the asynchronously called operations are included.

2. The method as claimed in claim 1, wherein the step (a) includes a step of:
(a1) assigning the processing priority to each of the plurality of objects based upon information-transfer relationships among the plurality of objects.

3. The method as claimed in claim 2, wherein the step (a1) includes steps of:
for each pair of the plurality of objects, determining whether at least one type of information is transferred therebetween; and
when the at least one type of information is transferred in a single direction from a first object to a second object, assigning a processing priority to the first object that is higher than a processing priority assigned to the second object.

4. The method as claimed in claim 3, wherein the step (b) includes a step of:
(b1) placing a reference to each asynchronously called operation in a priority level of a queue corresponding to the processing priority assigned to the object in which the operation is included; and
(b2) executing the asynchronously called operations referenced in a highest priority level of the queue that includes a reference to an asynchronously called operation before executing an asynchronously called operation referenced in any other priority level of the queue.

5. The method as claimed in claim 2, wherein the step (b) includes a step of:
(b1) placing a reference to each asynchronously called operation in a priority level of a queue corresponding to the processing priority assigned to the object in which the operation is included; and
(b2) executing the asynchronously called operations referenced in a highest priority level of the queue that includes a reference to an asynchronously called operation before executing an asynchronously called operation referenced in any other priority level of the queue.

6. The method as claimed in claim 1, wherein the step (b) includes a step of:
(b1) placing a reference to each asynchronously called operation in a priority level of a queue corresponding to the processing priority assigned to the object in which the operation is included; and
(b2) executing the asynchronously called operations referenced in a highest priority level of the queue that includes a reference to an asynchronously called operation before executing an asynchronously called operation referenced in any other priority level of the queue.

7. An apparatus for processing asynchronously called operations of a plurality of objects, comprising:
means for assigning a processing priority to each of the plurality of objects; and
means for executing asynchronously called operations of the plurality of objects in an order determined by the processing priorities assigned to the objects in which the asynchronously called operations are included.

8. The apparatus as claimed in claim 7, wherein the means for assigning includes means for assigning the processing priority to each of the plurality of objects based upon information-transfer relationships among the plurality of objects.

9. The apparatus as claimed in claim 8, wherein the means for assigning includes
means for determining, for each pair of the plurality of objects, whether at least one type of information is transferred therebetween; and
means for assigning a processing priority to a first object that is higher than a processing priority assigned to a second object when the at least one type of information is transferred in a single direction from the first object to the second object.

10. The apparatus as claimed in claim 9, wherein the means for executing includes:
means for placing a reference to each asynchronously called operation in a priority level of a queue corresponding to the processing priority assigned to the object in which the operation is included; and
means for executing the asynchronously called operations referenced in a highest priority level of the queue that includes a reference to an asynchronously called operation before executing an asynchronously called operation referenced in any other priority level of the queue.

11. The apparatus as claimed in claim 8, wherein the means for executing includes:
means for placing a reference to each asynchronously called operation in a priority level of a queue corresponding to the processing priority assigned to the object in which the operation is included; and
means for executing the asynchronously called operations referenced in a highest priority level of the queue that includes a reference to an asynchronously called operation before executing an asynchronously called operation referenced in any other priority level of the queue.

12. The apparatus as claimed in claim 7, wherein the means for executing includes:
means for placing a reference to each asynchronously called operation in a priority level of a queue corresponding to the processing priority assigned to the object in which the operation is included; and
means for executing the asynchronously called operations referenced in a highest priority level of the queue that includes a reference to an asynchronously called operation before executing an asynchronously called operation referenced in any other priority level of the queue.

13. A computer-readable medium for use with a processor, the medium having a plurality of instructions stored thereon which, when executed by the processor, cause the processor to perform steps of:
(a) assigning a processing priority to each of a plurality of objects; and
(b) executing asynchronously called operations of the plurality of objects in an order determined by the processing priorities assigned to the objects in which the asynchronously called operations are included.

14. The computer-readable medium as claimed in claim 13, wherein the step (a) includes a step of:
(a1) assigning the processing priority to each of the plurality of objects based upon information-transfer relationships among the plurality of objects.

15. The computer-readable medium as claimed in claim 14, wherein the step (a1) includes steps of:
for each pair of the plurality of objects, determining whether at least one type of information is transferred therebetween; and
when the at least one type of information is transferred in a single direction from a first object to a second object, assigning a processing priority to the first object that is higher than a processing priority assigned to the second object.

16. The computer-readable medium as claimed in claim 15, wherein the step (b) includes a step of:
(b1) placing a reference to each asynchronously called operation in a priority level of a queue corresponding to the processing priority assigned to the object in which the operation is included; and
(b2) executing the asynchronously called operations referenced in a highest priority level of the queue that includes a reference to an asynchronously called operation before executing an asynchronously called operation referenced in any other priority level of the queue.

17. The computer-readable medium as claimed in claim 14, wherein the step (b) includes a step of:
(b1) placing a reference to each asynchronously called operation in a priority level of a queue corresponding to the processing priority assigned to the object in which the operation is included; and
(b2) executing the asynchronously called operations referenced in a highest priority level of the queue that includes a reference to an asynchronously called operation before executing an asynchronously called operation referenced in any other priority level of the queue.

18. The computer-readable medium as claimed in claim 13, wherein the step (b) includes a step of:
(b1) placing a reference to each asynchronously called operation in a priority level of a queue corresponding to the processing priority assigned to the object in which the operation is included; and
(b2) executing the asynchronously called operations referenced in a highest priority level of the queue that includes a reference to an asynchronously called operation before executing an asynchronously called operation referenced in any other priority level of the queue.

19. An object-oriented system for processing asynchronously called operations of a plurality of objects, comprising:
a first object class, each of the plurality of objects being an instance of the first object class or a subclass of the first object class, and each of the plurality of objects including:
a first property indicating a processing priority,
a first operation, and
a second operation for asynchronously calling a first operation of another of the plurality of objects; and
a second object class, an instance of the second object class including at least one third operation for executing asynchronously called operations of the plurality of objects in an order determined by the first properties of the objects in which the asynchronously called operations are included.

20. The object-oriented system as claimed in claim 19, wherein each of the plurality of objects further includes:
at least one second property indicating at least one information-transfer relationship with another of the plurality of objects; and
at least one fourth operation for setting its first property based upon its at least one second property.

21. The object-oriented system as claimed in claim 20, wherein:
the at least one third operation includes:
a fifth operation for placing a reference to each asynchronously called operation in a priority level of a queue corresponding to the first property of the object in which the asynchronously called operation is included; and
a sixth operation for executing the asynchronously called operations referenced in a highest priority level of the queue that includes a reference to an asynchronously called operation before executing an asynchronously called operation referenced in any other priority level of the queue.

22. The object-oriented system as claimed in claim 19, wherein:
the at least one third operation includes:
a fourth operation for placing a reference to each asynchronously called operation in a priority level of a queue corresponding to the first property of the object in which the asynchronously called operation is included; and
a fifth operation for executing the asynchronously called operations referenced in a highest priority level of the queue that includes a reference to an asynchronously called operation before executing an asynchronously called operation referenced in any other priority level of the queue.
